# EUROPEAN PATENT APPLICATION

(11) **EP 4 306 605 A1**
(43) Date of publication of application: **17.01.2024**
(21) Application number: 23182998.7
(22) Date of filing: 03.07.2023
(51) Int. Cl.: C09J 7/29

(54) **THERMAL-ACTIVATED INTERNAL PEELABLE ADHESIVE TAPE AND PREPARATION AND APPLICATION THEREOF**

(30) Priority: 11.07.2022 CN 202210813605
(71) Applicant: tesa SE, 22848 Norderstedt (DE)
(72) Inventor: WANG, Jianxin, 22848 Norderstedt (DE); CAO, Min, 22848 Norderstedt (DE); WANG, Dr. Shuang, 22848 Norderstedt (DE)
(74) Representative: tesa SE

(57) **Abstract**

The invention relates to a heat-activated internal peeling tape and its preparation and application. Specifically, the present invention discloses an adhesive tape with a low melting point and a thermoplastic polymer layer as a thermal activation layer. The adhesive tape has excellent adhesion performance under normal use at room temperature and has an easy removal function when heated to a certain temperature. It can meet the requirements of the product in the entire life cycle, including providing reliable adhesion, and controllable removal to help realize product component recycling, and has a wide application prospect.

## Description

### TECHNICAL FIELD

The invention relates to the field of adhesive tape, in particular to a thermal-activated internal peelable adhesive tape and preparation and application thereof.

### BACKGROUND ART

Tape has a wide range of applications in many fields, and high adhesion is the most basic requirement for it. However, with the diversification of customer requirements, although the conventional high-performance adhesive tape provides high adhesion, when the bonded object needs to be separated under specific conditions, its high adhesion makes it difficult to disassemble, repair and re-bond.

Therefore, there is an urgent need in the art for an adhesive tape that has excellent adhesive properties when adhesion is required, but can be easily peeled off when separation is required.

### SUMMARY OF THE INVENTION

The object of the present invention is to provide an adhesive tape having both excellent adhesive property and peeling property, and preparation and application thereof.

In the first aspect of the present invention, it provides an adhesive tape, the adhesive tape comprising:
a first adhesive layer on the upper surface;
a second adhesive layer on the lower surface;
a reinforcement layer and a thermally activated layer between the first adhesive layer and the second adhesive layer;
the thermally activated layer is a thermoplastic polymer layer.

In another preferred embodiment, the first adhesive layer has a thickness of 5-100 µm; and/or
the second adhesive layer has a thickness of 5 -100 µm.

In another preferred embodiment, one reinforcement layer has a thickness of 2-250 µm.

In another preferred embodiment, the thermally activated layer has a thickness of 2-50 µm.

In another preferred embodiment, the material of the reinforcement layer is selected from the group consisting of PET, PBT, PE, PP, PU, Nylon, PU foam, and PE foam.

In another preferred embodiment, the polymer forming the thermoplastic polymer layer is selected from the group consisting of: ethylene-vinyl acetate copolymer, modified polyolefin, ethylene acrylic acid copolymer, ethylene terpolymer, polyamide copolymer, poly(trans-1,4-isoprene), polyethylene oxide, or a combination thereof.

In another preferred embodiment, the tape comprises from top to bottom:
a first adhesive layer;
a reinforcement layer;
a thermally activated layer;
a second adhesive layer.

In another preferred embodiment, the tape comprises from top to bottom:
a first adhesive layer;
a reinforcement layer;
a thermally activated layer;
a reinforcement layer;
a second adhesive layer.

In another preferred embodiment, the adhesive tape has a thickness of 50-500 µm.

In the second aspect of the present invention, an adhesive assembly is provided, the adhesive assembly comprises a first assembly, a second assembly and the adhesive tape of the first aspect of the present invention;
the first component and the second component are bonded by the adhesive tape.

It should be understood that in the present invention, any of the technical features specifically described above and below (such as in the Examples) can be combined with each other, so as to constitute new or preferred technical solutions which will not redundantly be described one by one herein.

### DESCRIPTION OF FIGURES

Figure 1 is a structural schematic diagram of adhesive tape one of the present invention.
Figure 2 is a structural schematic diagram of adhesive tape two of the present invention.
Figure 3 is a graph showing the relationship of peel force and temperature of adhesive tape two of the present invention.
Figure 4 is a change curve of the peeling force of adhesive tape two of the present invention under different aging conditions.
Figure 5 shows the peel force of adhesive tape two of the present invention when cooled to room temperature after heat treatment at 90 °C for 1 minute.
Figure 6 is a graph showing the relationship of peel force and temperature of adhesive tape C1.

### DETAILED DESCRIPTION OF THE INVENTION

After a long and intensive study, the present inventors have unexpectedly prepared an adhesive tape having both excellent adhesive properties and excellent peeling properties by optimizing the composition and/or structure. When the adhesive tape is used for bonding, the components to be bonded can be bonded quickly with high strength; when the bonded components need to be separated, after heat treatment by heating and/or laser treatment, the peeling force of the adhesive tape will be rapidly reduced, so that the bonded components can be easily and conveniently separated. The tape has excellent comprehensive performance, can fully meet customer needs and market demand, and has a wide range of application prospects. On this basis, the inventors have completed the present invention.

### TERMS

The English abbreviations used in the present invention have the following meanings:
PET: polyethylene terephthalate
PBT: Polybutylene terephthalate
PE: polyethylene
PP: polypropylene
PU: polyurethane
Nylon: Polyamide
**thermally activated internal peelable adhesive tape and its application**

The invention provides an adhesive tape comprising:
a first adhesive layer on the upper surface;
a second adhesive layer on the lower surface;
a reinforcement layer and a thermally activated layer between the first adhesive layer and the second adhesive layer;
the thermally activated layer is a thermoplastic polymer layer.

In another preferred embodiment, the components of the first adhesive layer and the second adhesive layer are independently selected from the group consisting of acrylate, natural rubber, thermoplastic styrene block copolymer, silicone, EVA adhesive, or a combination thereof.

In another preferred embodiment, the first adhesive layer has a thickness of 5-100 µm, preferably 25-75 µm, more preferably 45-55 µm.

In another preferred embodiment, the second adhesive layer has a thickness of 5-100 µm, preferably 25-75 µm, more preferably 45-55 µm.

In another preferred embodiment, one reinforcement layer has a thickness of 2-250 µm, preferably 10-150 µm, more preferably 12-100 µm.

In another preferred embodiment, the thermally activated layer has a thickness of 2-50 µm, preferably 5-30 µm, more preferably 10-20 µm.

In another preferred embodiment, the thermally activated layer is a low melting point polymer layer. In another preferred embodiment, the melting point of the low melting point polymer is 60-150°C, preferably 70-120 °C, more preferably 70-90 °C.

In another preferred embodiment, the molecular weight of the low melting point polymer is 1000-1000000, preferably 1000-500000, more preferably 2000-500000.

In another preferred embodiment, the low melting point polymer is a thermoplastic polymer.

In another preferred embodiment, the thickness of the adhesive tape is 50-500 µm, preferably 80-400 µm, more preferably 100-350 µm.

In another preferred embodiment, in the adhesive tape, the thermally activated layer and the reinforcement layer are set adjacent to each other.

It should be understood that, after the heat treatment, the thermally activated layer of the adhesive tape of the present invention will be separated from the reinforcement layer, so as to realize the separation of the bonded components, that is, to realize the peeling of the adhesive tape.

More specifically, after being heated, the thermally activated layer will absorb heat and melt, so that the cohesion of the thermally activated layer is reduced, and the adhesion with the adhesive layer and/or the reinforcement layer is reduced, and finally the separation of the bonded component is achieved.

In another preferred embodiment, the thermal activation temperature of the thermally activated layer is 70-120 °C, preferably 80-110 °C, more preferably 85-105 °C, most preferably 90-100 °C.

In another preferred embodiment, the heat treatment is performed by one or more manners selected from the group consisting of heat treatment, laser treatment, or a combination thereof.

In another preferred embodiment, room temperature refers to 0-40 °C, preferably 10-30 °C, more preferably 15-25 °C.

It should be understood that the adhesive tape of the present invention can be prepared using conventional preparation methods in the art.

This tape is suitable for being used as an easy for disassembly, reworkable double-sided pressure-sensitive tape, used in the production of various products, especially electronic products. Representative electronic products include (but are not limited to): computers, televisions, laptops, tablets, mobile phones, digital cameras, etc., which need bonding between various electronic components and facilitate subsequent disassembly, recycling and rework of electronic components.

Compared with the prior art, the present invention has the following main advantages:
(1) After heat treatment, the adhesive force of the tape will be significantly reduced, so that the tape has excellent peeling performance;
(2) Under normal use at room temperature, the adhesive tape has excellent adhesion performance;
(3) After the heat treatment, when the temperature of the tape is restored to room temperature, the adhesive force of the tape will be restored as before;
(4) The adhesive tape has the characteristics of simple preparation process, low cost and wide application range.

The present invention will be further illustrated below with reference to the specific examples. It should be understood that these examples are only to illustrate the invention but not to limit the scope of the invention. The experimental methods with no specific conditions described in the following examples are generally performed under the conventional conditions, or according to the manufacture's instructions. Unless indicated otherwise, percentage and parts are calculated by weight.

Unless otherwise defined, all professional and scientific terminology used in the text have the same meanings as known to the skilled in the art. In addition, any methods and materials similar or equal with the recorded content can apply to the methods of the invention. The method of the preferred embodiment described herein and the material are only for demonstration purposes.

### Example 1 adhesive tape one

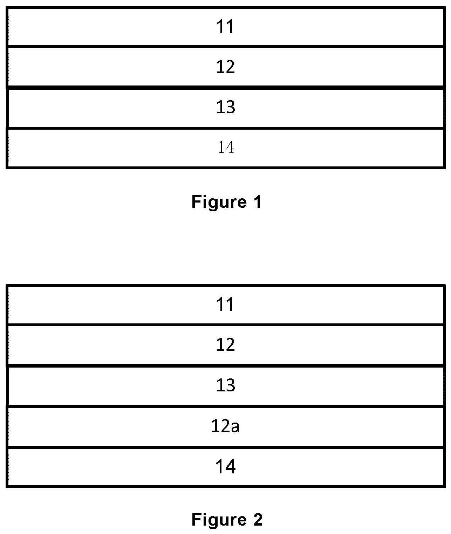

The structure of adhesive tape one is shown in Figure 1, including from top to bottom:
a first adhesive layer made of acrylate and having a thickness of 50 µm;
a reinforcement layer made of PET and having a thickness of 12 µm;
a thermally activated layer made of ethylene-vinyl acetate copolymer and having a thickness of 10 µm;
a second adhesive layer made of acrylate and having a thickness of 50 µm.

### Example 2 adhesive tape two

The structure of adhesive tape two is shown in Figure 2, including from top to bottom:
a first adhesive layer made of acrylate and having a thickness of 50 µm;
a reinforcement layer made of PU foam and having a thickness of 100 µm;
a thermally activated layer made of modified polyolefin and having a thickness of 20 µm;
a reinforcement layer made of PU foam and having a thickness of 100 µm;
a second adhesive layer made of acrylate and having a thickness of 50 µm.

### Performance test and analysis

Peel performance test: GBT 2792-1981, test plate 304 mirror stainless steel.

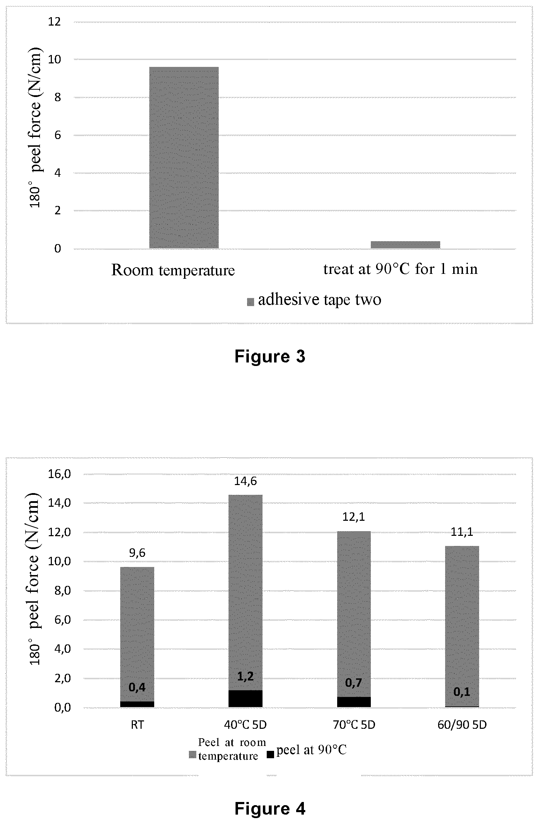

Figure 3 is a graph showing the relationship of peel force and temperature of adhesive tape two of the present invention.

It can be seen from Figure 3 that, after heat treatment at 90°C for 1 minute, the peeling force of adhesive tape two is significantly reduced, and the peeling failure mode changes from the separation of the adhesive layer and the 304 mirror stainless steel under normal temperature peeling to the separation of the reinforcement layer and the thermally activated layer, so that the adhesive tape basically has no adhesive force, that is, the bonded component 304 stainless steel can be separated with very small peeling force.

Figure 4 is a change curve of the peeling force of adhesive tape two of the present invention under different aging conditions.

It can be seen from Figure 4 that, after aging at room temperature, 40 °C, 70 °C and 60 °C with 90% humidity for 5 days, the 180 ° peel force test was carried out on 304 mirror stainless steel at room temperature and 90 °C respectively. It is obvious that the short-term aging under different conditions will not reduce the peel force of adhesive tape two, and the peel failure mode continues to be the original separation mode of adhesive layer and 304 mirror stainless steel, and after undergoing different aging conditions, the adhesive tape two can still achieve separation of the reinforcing layer and the thermally activated layer with very small force at high temperature.

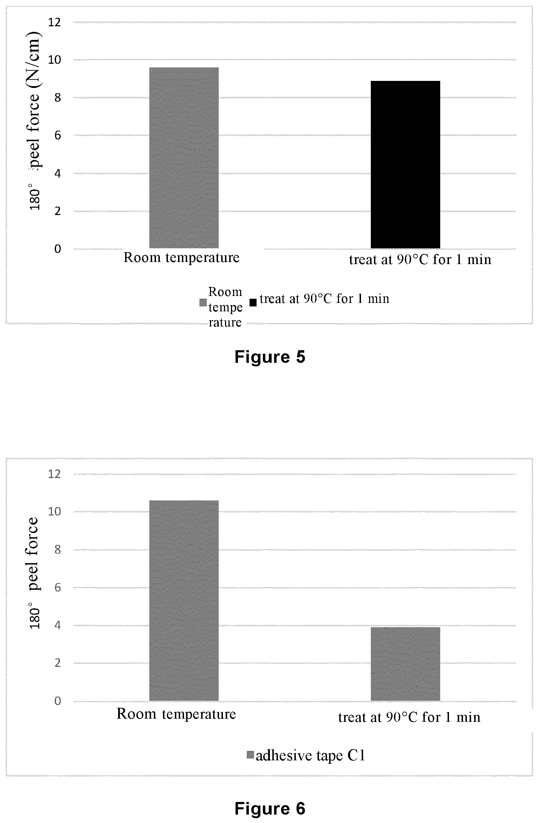

Figure 5 shows the peel force of adhesive tape two of the present invention when cooled to room temperature after heat treatment at 90 °C for 1 minute.

As can be seen from Figure 5, the adhesive tape two is cooled to room temperature after a heat treatment of 90°C for 1 minute, and its peel force is still at the same level as the original sample peel force at room temperature and the failure mode remains unchanged. Because the melting and solidification of the thermally activated layer is a reversible physical change.

### Comparative example 1 adhesive tape C1

The structure of adhesive tape C1 from top to bottom consists:
a first adhesive layer made of acrylate and having a thickness of 50 µm;
a reinforcement layer made of PET and having a thickness of 12 µm;
a thermally activated layer made of metal and having a thickness of 6 µm;
a second adhesive layer made of acrylate and having a thickness of 50 µm.

Figure 6 is a graph showing the relationship of peel force and temperature of adhesive tape C1.

It can be seen from Figure 6 that, after 90 °C, 1 minute of heat treatment, the peeling force of adhesive tape C1 does not significantly decrease, and basically retains 40 % of the original adhesive force at room temperature. Compared with the test results of adhesive tape two after 90 °C, 1 minute of heat treatment, it is more difficult to peel from the 304 stainless steel plate.

For the adhesive tape of the present invention, which uses a high molecular polymer as the thermally activated layer, a common heating tool such as an oven or a heating plate can be used for heating, so that the transition of the thermally activated layer of the high molecular polymer from a solid state to a liquid state can be conveniently achieved, and excellent peeling of the adhesive tape can be conveniently achieved. However, in the case of the adhesive tape C1, excellent peeling of the adhesive tape cannot be achieved well at a simple high temperature of 90 ° C due to the use of metal as a thermally activated layer.
All literatures mentioned in the present invention are incorporated by reference herein, as though individually incorporated by reference. Additionally, it should be understood that after reading the above teaching, many variations and modifications may be made by the skilled in the art, and these equivalents also fall within the scope as defined by the appended claims.

### Reference list

| | |
|---|---|
| first adhesive layer | 11 |
| reinforcement layer | 12, 12a |
| thermally activated layer | 13 |
| second adhesive layer | 14 |

## Claims

1. An adhesive tape, **characterized in that** the adhesive tape comprises:
a first adhesive layer on the upper surface;
a second adhesive layer on the lower surface;
a reinforcement layer and a thermally activated layer between the first adhesive layer and the second adhesive layer;
the thermally activated layer is a thermoplastic polymer layer.

2. The adhesive tape of claim 1, wherein the first adhesive layer has a thickness of 5 -100 µm; and/or
the second adhesive layer has a thickness of 5 -100 µm.

3. The adhesive tape of claim 1, wherein one reinforcing layer has a thickness of 2-250 µm.

4. The adhesive tape of claim 1, wherein the thermally activated layer has a thickness of 2-50 µm.

5. The adhesive tape of claim 1, wherein the material of the reinforcement layer is selected from the group consisting of: PET, PBT, PE, PP, PU, Nylon, PU foam, PE foam.

6. The adhesive tape of claim 1, wherein the polymer forming the thermoplastic polymer layer is selected from the group consisting of: ethylene-vinyl acetate copolymer, modified polyolefin, ethylene acrylic acid copolymer, ethylene terpolymer, polyamide copolymer, poly(trans-1,4-isoprene), polyethylene oxide, or a combination thereof.

7. The adhesive tape of claim 1, wherein the adhesive tape comprises, in order from top to bottom:
a first adhesive layer;
a reinforcement layer;
a thermally activated layer;
a second adhesive layer.

8. The adhesive tape of claim 1, wherein the adhesive tape comprises, in order from top to bottom:
a first adhesive layer;
a reinforcement layer;
a thermally activated layer;
a reinforcement layer;
a second adhesive layer.

9. The adhesive tape of claim 1, wherein the adhesive tape has a thickness of 50-500 µm.

10. An adhesive assembly, wherein the adhesive assembly comprises a first component, a second component and the adhesive tape of claim 1;
the first component and the second component are bonded by the adhesive tape.
